# EUROPÄISCHE PATENTANMELDUNG

(11) **EP 2 270 351 A1**
(43) Veröffentlichungstag der Anmeldung: **05.01.2011**
(21) Anmeldenummer: 09163553.2
(22) Anmeldetag: 24.06.2009
(51) Int. Cl.: F16D 25/0638

(54) **Kupplungsanordnung, insbesondere für den Antriebsstrang eines Fahrzeugs**

(71) Anmelder: ZF Friedrichshafen AG, 88038 Friedrichshafen (DE)
(72) Erfinder: Matschas, Steffen, 97469, Gochsheim (DE); Bartha, Alexander, Dr., 97082, Würzburg (DE); Paone, Alessio, 97421, Schweinfurt (DE); Schmitt, Guido, 97714, Oerlenbach (DE)

(57) **Zusammenfassung**

Eine Kupplungsanordnung, insbesondere für den Antriebsstrang eines Fahrzeugs, umfasst ein wenigstens bereichsweise mit Fluid gefülltes oder füllbares Gehäuse (12), eine mit dem Gehäuse (12) zur Drehung um eine Drehachse (A) gekoppelte erste Reibflächenanordnung (30), eine mit einem mit einer Abtriebswelle (38) zur Drehung zu koppelnden Abtriebsorgan (36) zur Drehung um eine Drehachse (A, A') gekoppelte zweite Reibflächenanordnung (32), ein mit dem Gehäuse (12) drehbares Anpresselement (40), durch welches die erste Reibflächenanordnung (30) und die zweite Reibflächenanordnung (32) in Reibeingriff pressbar sind, ein mit dem Abtriebsorgan (36) zur gemeinsamen Drehung gekoppeltes Zwischenwellenelement (58), wobei das Gehäuse (12) bezüglich einer im Wesentlichen feststehenden Baugruppe über eine erste Lageranordnung (20) drehbar zu lagern oder gelagert ist und das Zwischenwellenelement (58) bezüglich einer im Wesentlichen feststehenden Baugruppe (64) über eine zweite Lageranordnung (62) drehbar zu lagern oder gelagert ist, ist **dadurch gekennzeichnet, dass** das Gehäuse (12) bezüglich des Zwischenwellenelements (58) über eine dritte Lageranordnung (68) drehbar gelagert ist und dass die erste Lageranordnung (20) ein Kippbewegungsspiel zwischen dem Gehäuse (12) und der im Wesentlichen feststehenden Baugruppe (22) zulässt und die dritte Lageranordnung (68) ein Kippbewegungsspiel zwischen dem Gehäuse (12) und dem Zwischenwellenelement (58) zulässt.

## Beschreibung

Die vorliegende Erfindung betrifft eine Kupplungsanordnung, insbesondere für den Antriebsstrang eines Fahrzeugs, umfassend ein wenigstens bereichsweise mit Fluid gefülltes oder füllbares Gehäuse, eine mit dem Gehäuse zur Drehung um eine Drehachse gekoppelte erste Reibflächenanordnung, eine mit einem mit einer Abtriebswelle zur Drehung zu koppelnden Abtriebsorgan zur Drehung um eine Drehachse gekoppelte zweite Reibflächenanordnung, ein mit dem Gehäuse drehbares Anpresselement, durch welches die erste Reibflächenanordnung und die zweite Reibflächenanordnung in Reibeingriff pressbar sind, ein mit dem Abtriebsorgan zur gemeinsamen Drehung gekoppeltes Zwischenwellenelement, wobei das Gehäuse bezüglich einer im Wesentlichen feststehenden Baugruppe über eine erste Lageranordnung drehbar zu lagern oder gelagert ist und das Zwischenwellenelement bezüglich einer im Wesentlichen feststehenden Baugruppe über eine zweite Lageranordnung drehbar zu lagern oder gelagert ist.

Eine derartige, beispielsweise als nasslaufende Kupplung ausgebildete Kupplungsanordnung wird im Allgemeinen als Trennelement in einem Antriebssystem eines Fahrzeugs, insbesondere auch einem Hybrid-Antriebssystem, eingesetzt, um den Drehmomentenfluss zwischen einem Antriebsaggregat, beispielsweise einer Brennkraftmaschine, und dem folgenden Bereich eines Antriebsstrangs, beispielsweise einem Getriebe, wahlweise zu unterbrechen bzw. herzustellen. Bei derartigen Antriebssystemen sind die wesentlichen Systembereiche Antriebsaggregat und Getriebe grundsätzlich in fest definierten Positionierungen in einem Fahrzeug angebracht. Dabei ist allgemein vorgesehen, dass eine Antriebswelle des Antriebsaggregats und eine Getriebeeingangswelle des Getriebes axial fluchtend liegen, grundsätzlich also um die gleiche Drehachse rotieren. Dies bedeutet, dass die zwischen diesen beiden Systembereichen liegenden Baugruppen, insbesondere auch die Kupplungsanordnung, auch so ausgestaltet sind, dass sie eine Drehkopplungsverbindung zwischen der Antriebswelle und der Abtriebswelle so herstellen, dass im Wesentlichen alle Baugruppen um die gleiche Drehachse rotieren. Bedingt durch grundsätzlich nicht vermeidbare Fertigungstoleranzen kann es sein, dass die Antriebswelle und die Abtriebswelle bezüglich einander geringfügig versetzt liegen, also grundsätzlich nicht um die gleiche Drehachse rotieren. Auch die an zwei Positionen bezüglich im Wesentlichen feststehender Baugruppen vorgegebene Lagerungspositionierung kann auf Grund nicht vermeidbarer Fertigungs- bzw. Montagetoleranzen zu einem Achsversatz im Antriebssystem führen.

Es ist die Aufgabe der vorliegenden Erfindung, eine Kupplungsanordnung vorzusehen, welche die miteinander zu koppelnden Baugruppen auch bei bestehendem Achsversatz im Wesentlichen ohne dem Auftreten von Zwängungen koppeln kann.

Erfindungsgemäß wird diese Aufgabe gelöst durch eine Kupplungsanordnung, insbesondere für den Antriebsstrang eines Fahrzeugs, umfassend ein wenigstens bereichsweise mit Fluid gefülltes oder füllbares Gehäuse, eine mit dem Gehäuse zur Drehung um eine Drehachse gekoppelte erste Reibflächenanordnung, eine mit einem mit einer Abtriebswelle zur Drehung zu koppelnden Abtriebsorgan zur Drehung um eine Drehachse gekoppelte zweite Reibflächenanordnung, ein mit dem Gehäuse drehbares Anpresselement, durch welches die erste Reibflächenanordnung und die zweite Reibflächenanordnung in Reibeingriff pressbar sind, ein mit dem Abtriebsorgan zur gemeinsamen Drehung gekoppeltes Zwischenwellenelement, wobei das Gehäuse bezüglich einer im Wesentlichen feststehenden Baugruppe über eine erste Lageranordnung drehbar zu lagern oder gelagert ist und das Zwischenwellenelement bezüglich einer im Wesentlichen feststehenden Baugruppe über eine zweite Lageranordnung drehbar zu lagern oder gelagert ist. Gemäß einem ersten Aspekt der vorliegenden Erfindung ist dabei weiter vorgesehen, dass das Gehäuse bezüglich des Zwischenwellenelements über eine dritte Lageranordnung drehbar gelagert ist und dass die erste Lageranordnung ein Kippbewegungsspiel zwischen dem Gehäuse und der im Wesentlichen feststehenden Baugruppe zulässt und die dritte Lageranordnung ein Kippbewegungsspiel zwischen dem Gehäuse und dem Zwischenwellenelement zulässt.

Durch das Vorsehen zweier das Gehäuse der Kupplungsanordnung lagernder Lageranordnungen jeweils mit Kippbewegungsspiel wird es möglich, dass das Gehäuse unter Ausnutzung dieses Kippbewegungsspiels nach Art einer Gelenkwelle verschwenkt, so dass zwischen einem antreibenden Systembereich, also beispielsweise einem Abtriebsorgan, und einem das Drehmoment weiterleitenden Systembereich, also beispielsweise einem Getriebe auch bei permanent oder vorübergehend auftretendem Achsversatz keine durch eine zu starre Verbindung der Kupplungsanordnung auftretenden Zwängungen entstehen.

Es ist dabei darauf hinzuweisen, dass im Sinne der vorliegenden Erfindung das Bereitstellen einer Lageranordnung mit Kippbewegungsspiel bedeutet, dass in der Lageranordnung selbst dafür gesorgt ist, dass die beiden durch die Lageranordnung unmittelbar gekoppelten Komponenten bezüglich einander um die für die Lageranordnung an sich vorgesehene Drehachse verkippen können, und zwar in einem Ausmaß, welches über demjenigen liegt, dass auch bei dem Versuch, ein derartiges Spiel zu vermeiden, auf Grund der zwangsweise vorhandenen Fertigungstoleranzen und auf Grund der Tatsache, dass die verschiedenen Komponenten sich auch bezüglich einander drehen können müssen, nicht vermeidbar ist.

Um innerhalb des gesamten Antriebssystems gleichwohl eine definierte Positionierung vorgeben zu können, wird weiter vorgeschlagen, dass die zweite Lageranordnung zwischen dem Zwischenwellenelement und der im Wesentlichen feststehenden Baugruppe im Wesentlichen kein Kippbewegungsspiel oder ein geringeres Kippbewegungsspiel als die erste Lageranordnung und die dritte Lageranordnung zulässt.

Weiter kann der Aufbau der Kupplungsanordnung derart sein, dass die erste Lageranordnung an einem ersten axialen Endbereich der Kupplungsanordnung vorgesehen ist, die zweite Lageranordnung an einem zweiten axialen Endbereich der Kupplungsanordnung vorgesehen ist und die dritte Lageranordnung axial zwischen der ersten Lageranordnung und der zweiten Lageranordnung vorgesehen ist.

Bei einer zweiten Variante der vorliegenden Erfindung ist zur Lösung der vorangehend angegebenen Aufgabe weiterhin vorgesehen, dass ein Element von Abtriebsorgan und Zwischenwellenelement eine Außenumfangsverzahnung aufweist und das andere Element von Abtriebsorgan und Zwischenwellenelement eine mit der Außenumfangsverzahnung in Drehkopplungseingriff stehende Innenumfangsverzahnung aufweist und dass die Außenumfangsverzahnung und die Innenumfangsverzahnung mit Umfangsbewegungsspiel oder/und Radialbewegungsspiel ineinander eingreifen.

Durch das zwischen dem Abtriebsorgan und dem Zwischenwellenelement vorhandene Bewegungsspiel kann sichergestellt werden, dass dann, wenn ein Achsversatz auftritt oder vorhanden ist und beispielsweise auch das Gehäuse im Sinne einer Gelenkwellenverbindung verkippen kann, zwischen dem Abtriebsorgan und dem Zwischenwellenelement keine Zwängungen entstehen.

Gemäß einem weiteren Aspekt betrifft die vorliegende Erfindung ein Verfahren zum Zusammenbau einer Kupplungsanordnung, wobei die Kupplungsanordnung umfasst:
- ein Gehäuse mit einer ersten Gehäuseschale und einer zweiten Gehäuseschale,
- eine mit der zweiten Gehäuseschale im Wesentlichen drehfest gekoppelte erste Reibflächenanordnung,
- eine mit einem Abtriebsorgan vermittels eines Reibelemententrägers im Wesentlichen drehfest gekoppelte zweite Reibflächenanordnung,
- ein einen Gehäuseinnenraum in einen die Reibflächenanordnungen enthaltenden ersten Raumbereich und einen mit Druckfluid zu speisenden zweiten Raumbereich unterteilendes Anpresselement, durch welches die Reibflächenanordnungen in gegenseitigen Reibeingriff pressbar sind.

Bei der Montage derartiger Kupplungsanordnungen besteht im Allgemeinen die Zielsetzung, einerseits eine möglichst effiziente und wenige Arbeitsschritte erfordernde Vorgehensweise zu finden, andererseits dafür zu sorgen, dass beim Zusammenfügen die nachfolgende volle Funktionalität sichergestellt werden kann, insbesondere vermieden wird, dass Schmutzpartikel in die Kupplungsanordnung eingetragen werden. Es ist daher eine weitere Zielsetzung der vorliegenden Erfindung, ein Verfahren zum Zusammenbau einer Kupplungsanordnung vorzusehen, mit welchem die Kupplungsanordnung in effizienter und die volle Funktionalität sicherstellender Weise zusammengesetzt werden kann.

Erfindungsgemäß wird diese Aufgabe gelöst durch ein Verfahren zum Zusammenbau einer Kupplungsanordnung, die Kupplungsanordnung umfassend:
- ein Gehäuse mit einer ersten Gehäuseschale und einer zweiten Gehäuseschale,
- eine mit der zweiten Gehäuseschale im Wesentlichen drehfest gekoppelte erste Reibflächenanordnung,
- eine mit einem Abtriebsorgan vermittels eines Reibelemententrägers im Wesentlichen drehfest gekoppelte zweite Reibflächenanordnung,
- ein einen Gehäuseinnenraum in einen die Reibflächenanordnungen enthaltenden ersten Raumbereich und einen mit Druckfluid zu speisenden zweiten Raumbereich unterteilendes Anpresselement, durch welches die Reibflächenanordnungen in gegenseitigen Reibeingriff pressbar sind, wobei das Verfahren die Maßnahmen umfasst:
   a) Bereitstellen einer ersten Vormontagebaugruppe (114), umfassend die erste Gehäuseschale (14) und das Anpresselement (40),
   b) Bereitstellen einer zweiten Vormontagebaugruppe (116), umfassend die zweite Gehäuseschale (16),
   c) Bereitstellen einer dritten Vormontagebaugruppe (118), umfassend die erste Reibflächenanordnung (30) und zweite Reibflächenanordnung (32),
   d) Bereitstellen einer vierten Vormontagebaugruppe (120), umfassend den Reibelemententräger (34) und das Abtriebsorgan (36),
   e) Verbinden der Vormontagebaugruppen (114, 116, 118, 120) miteinander und dabei Verbinden der Gehäuseschalen (14, 16) in einem Verbindungsbereich durch Schweißen.

Durch das Zusammenfassen in einzelne Vormontagebaugruppen, die nachfolgend dann zusammengesetzt werden, kann sichergestellt werden, dass innerhalb der einzelnen Vormontagebaugruppen Bearbeitungsmaßnahmen, beispielsweise auch Schweißvorgänge durchgeführt werden können, die nicht zu Beeinträchtigung von den anderen Montagebaugruppen zugeordneten Elementen führen können.

Beispielsweise kann vorgesehen sein, dass die Maßnahme e) das Einsetzen der dritten Vormontagebaugruppe in die zweite Vormontagebaugruppe und dabei das im Wesentlichen drehfeste Koppeln der zweiten Gehäuseschale mit der ersten Reibflächenanordnung umfasst und davor oder danach das Einsetzen der vierten Vormontagebaugruppe in die dritte Vormontagebaugruppe und dabei das im Wesentlichen drehfeste Koppeln der zweiten Reibflächenanordnung mit dem Reibelemententräger umfasst.

Bei der mit dem erfindungsgemäßen Verfahren zusammenzusetzenden Kupplungsanordnung kann weiterhin vorgesehen sein, dass das Gehäuse einen in einem radial inneren Bereich der ersten Gehäuseschale vorgesehenen Nabenbereich umfasst. In diesem Falle kann bei dem Verfahren dann die Maßnahme a) das Verbinden der ersten Gehäuseschale mit dem Nabenbereich sowie das Anordnen des Anpresselements in einem durch die erste Gehäuseschale um den Nabenbereich bereitgestellten Aufnahmeraum umfassen.

Die Kupplungsanordnung kann weiterhin eine im ersten Raumbereich angeordnete und dem Anpresselement axial gegenüber liegende Stauscheibe umfassen, welche bei Durchführung der Maßnahme a) an dem Nabenbereich angebracht wird, vorzugsweise nach dem Anordnen des Anpresselements in dem Aufnahmeraum.

Bei der Durchführung der Maßnahme e) kann ein Axialabstützlager zwischen der ersten Vormontagebaugruppe und der vierten Vormontagebaugruppe angeordnet werden.

Die mit dem erfindungsgemäßen Verfahren zusammenzufügende Kupplungsanordnung kann weiterhin ein die zweite Gehäuseschale über eine Lageranordnung drehbar tragendes und mit dem Abtriebsorgan zur gemeinsamen Drehung gekoppeltes Zwischenwellenelement umfassen. Um dabei dann weiter den Vorgang des Zusammenfügens der Kupplungsanordnung unter Verwendung der vorangehend angesprochenen Vormontagebaugruppen strukturiert durchführen zu können, wird vorgeschlagen, dass die Maßnahme b) das Verbinden der zweiten Gehäuseschale mit dem Zwischenwellenelement unter Zwischenlagerung der Lageranordnung und gegebenenfalls einer Dichtungsanordnung umfasst.

Die erste Reibflächenanordnung und die zweite Reibflächenanordnug der Kupplungsanordnung können eine Mehrzahl von Reibscheiben umfassen, die bei Durchführung der Maßnahme c) dann alternierend aufeinander folgend angeordnet werden können.

Weiterhin kann die Maßnahme d) das direkte oder mittelbare Verbinden des Reibelemententrägers mit dem Abtriebsorgan durch Verschweißung oder/und Vernietung umfassen.

Die vorliegende Erfindung wird nachfolgend mit Bezug auf die beiliegenden Figuren detailliert beschrieben. Es zeigt:
- Fig. 1: eine als Trennkupplung in einem Antriebsstrang vorgesehene Kupp- lungsanordnung, aufgenommen in einer Kupplungs- bzw. Getriebe- glocke;
- Fig. 2: die Kupplungsanordnung der Fig. 1 vergrößert;
- Fig. 3: eine skizzenartige Darstellung der an verschiedenen Bereichen gela- gerten Kupplungsanordnung in einem Zustand ohne Achsversatz;
- Fig. 4: eine der Fig. 3 entsprechende Darstellung der Kupplungsanordnung in einem Zustand mit Achsversatz;
- Fig. 5: eine Explosionsdarstellung der in Fig. 2 gezeigten Kupplungsanord- nung mit vier beim Zusammensetzen der Kupplungsanordnung be- reitgestellten Vormontagebaugruppen.

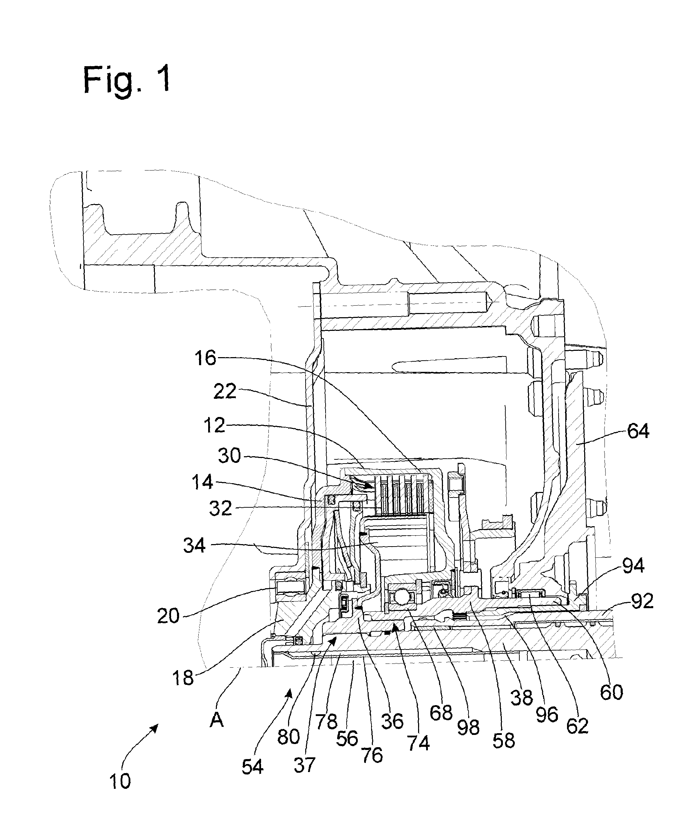

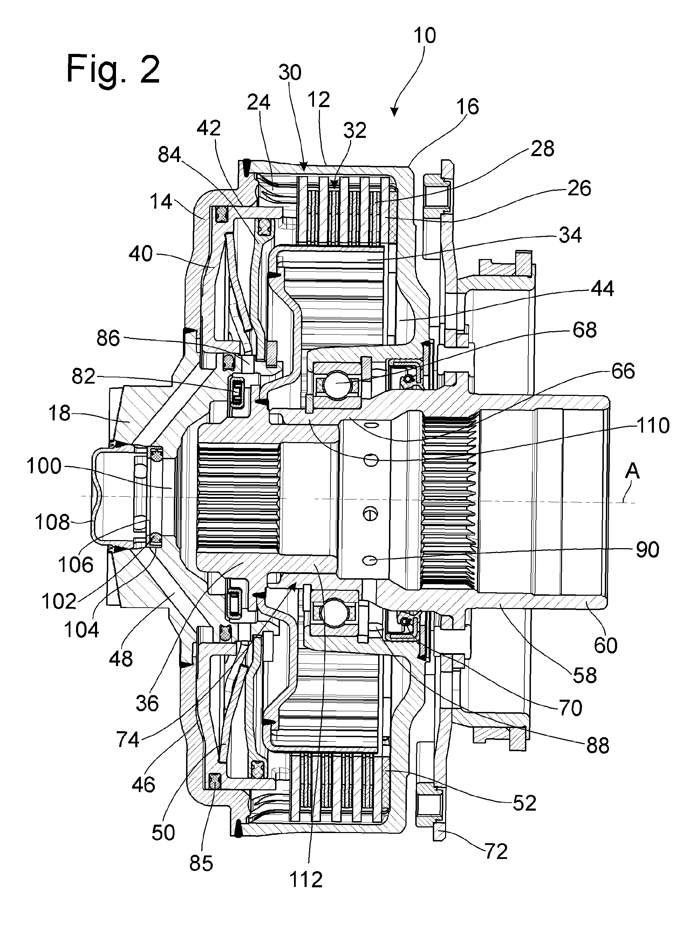

Eine als nasslaufende Kupplung ausgebildete erfindungsgemäß aufgebaute Kupplungsanordnung ist in den Fig. 1 und 2 allgemein mit 10 bezeichnet. Die Kupplungsanordnung 10 umfasst ein Gehäuse 12 mit einer einem Antriebsaggregat zugewandt zu positionierenden ersten Gehäuseschale 14 und einer einem Getriebe zugewandt zu positionierenden zweiten Gehäuseschale 16. Die beiden Gehäuseschalen 14, 16 sind in ihrem radial äußeren Bereich miteinander beispielsweise durch Verschweißung verbunden.

Mit der ersten Gehäuseschale 14 ist in deren radial inneren Bereich eine Gehäusenabe 18 verbunden, welche über ein Lager, z.B. Wälzkörperlager, 20 an einer im Wesentlichen feststehenden Baugruppe 22, beispielsweise einem in einer Getriebe- bzw. Kupplungsglocke getragenen Lagerschild, um eine Drehachse A drehbar gelagert ist.

In einem Innenraum 24 des Gehäuses sind zwei jeweils eine Mehrzahl von Reibscheiben bzw. Lamellen 26 bzw. 28 umfassende Reibflächenanordnungen 30, 32 vorgesehen. Die Lamellen 26, 28 der beiden Reibflächenanordnungen 30, 32 sind axial aufeinander folgend alternierend angeordnet. Die Lamellen 26 der ersten Reibflächenanordnung 30 sind in ihrem radial äußeren Bereich durch Verzahnung an einen im Wesentlichen axial sich erstreckenden Abschnitt der zweiten Gehäuseschale 16 zur gemeinsamen Drehung mit dieser angekoppelt. Die Lamellen 28 der zweiten Reibflächenanordnung sind in ihrem radial inneren Bereich durch Verzahnung an einen Reibelemententräger 34 zur gemeinsamen Drehung angekoppelt. Mit einem radial inneren Bereich ist der Reibelemententräger 34 an eine als Abtriebsorgan wirksame Abtriebsnabe 36 angebunden. Die Abtriebsnabe 36 ist im zusammengefügten Zustand eines Antriebssystems durch Verzahnungsanordnungen bei 37 mit einer Abtriebswelle 38, beispielsweise Getriebeeingangswelle, im Wesentlichen drehfest gekoppelt.

Um die beiden Reibflächenanordnungen 30, 32 unter axialer Abstützung an der zweiten Gehäuseschale 16 in gegenseitigen Reibeingriff zu bringen, ist ein ringartig ausgebildeter und als Anpresselement wirkender Kupplungskolben 40 vorgesehen. Dieser ist in einem axial offenen und durch die erste Gehäuseschale 14 und die Gehäusenabe 18 gebildeten Aufnahmeraum 42 fluiddicht axial bewegbar aufgenommen und unterteilt den Innenraum 24 des Gehäuses in einen die beiden Reibflächenanordnungen 30, 32 und auch den Reibelemententräger 34 enthaltenden ersten Raumbereich 44 und einen zweiten Raumbereich 46. Über eine Mehrzahl nachfolgend noch erläuterter Fluidkanäle 48 kann der zweite Raumbereich 46 mit Fluid gespeist werden, um durch Erhöhung des Fluiddrucks im zweiten Raumbereich 46 bezüglich des Fluiddrucks im ersten Raumbereich 44 den Kupplungskolben 40 entgegen der Vorspannwirkung einer diesen in einen Ausrückzustand vorspannenden Feder 50 in Richtung auf die Lamellen 26, 28 zu zu bewegen und somit die Kupplungsanordnung 10 in einen Einrückzustand zu bringen. Wie bereits ausgeführt, stützen sich dabei die Lamellen 26, 28, von welchen beispielsweise die Lamellen 28 Reibbeläge tragen können, axial an der zweiten Gehäuseschale 16 ab, wobei diese Abstützung über an der axial letzten Lamelle 16 der ersten Reibflächenanordnung 30 vorgesehene, beispielsweise angeklebte Abstützelemente 52 erfolgen kann.

Zur Fluidzufuhr zu den Kanälen 48 und somit zum zweiten Raumbereich 46 weist die Abtriebswelle 38 einen einen zentralen und an deren axialem Endbereich 54 offenen Fluidkanal 56 auf, der beispielsweise getriebeseitig in Verbindung mit einer Fluidpumpe stehen kann. Das aus dem axialen Endbereich 54 im Wesentlichen auch axial austretende Fluid strömt in die Kanäle 48 und über diese in den zweiten Raumbereich 46.

Ein als Hohlwelle ausgebildetes Zwischenwellenelement 58 ist in einem ersten axialen Endbereich 60 über ein Lager, z.B. Wälzkörperlager, 62 an einer im Wesentlichen feststehenden Baugruppe 64, beispielsweise einem weiteren Lagerschild, zur Drehung um die Drehachse A getragen. In seinem anderen axialen Endbereich 66 trägt das Zwischenwellenelement 58 über ein weiteres Lager, z.B. Wälzkörperlager, 68 den radial inneren Bereich der zweiten Gehäuseschale 16, so dass das Gehäuse 12 einerseits über das Lager 20 und andererseits über das Lager 68 definiert gelagert ist. Eine zwischen der zweiten Gehäuseschale 16 und dem Zwischenwellenelemet 58 angeordnete Dichtungsanordnung 70 stellt an diesem axialen Endbereich des Gehäuses 12 den fluiddichten Abschluss des Innenraums 24 sicher.

Man erkennt dabei, dass die zweite Gehäuseschale 16 nicht nur einen wesentlichen Bereich des Gehäuses bereitstellt, sondern in ihrem radial äußeren, näherungsweise axial sich erstreckenden Abschnitt einen Lamellenträger für die erste Reibflächenanordnung 30 bereitstellt und in ihrem radial inneren, näherungsweise ebenfalls axial sich erstreckenden Abschnitt einen Lagerhals für das Lager 68 bereitstellt. Dies führt im Vergleich zu einem aus mehreren Teilen zusammengefügten Aufbau zu deutlich niedrigeren Herstellungskosten bei gleichzeitig erhöhter Fertigungsgenauigkeit.

Insbesondere bei Einsatz in einem Hybrid-Antriebssystem kann das Zwischenwellenelement 58 einen Träger 72 für den Rotor einer Elektromaschine aufweisen bzw. tragen. Der Stator der Elektromaschine kann an einer im Wesentlichen feststehenden Baugruppe, wie z.B. einer Getriebeglocke, getragen sein.

Das Zwischenwellenelement 58 ist bei 74 durch Verzahnungsanordnungen mit der Abtriebsnabe 36 zur gemeinsamen Drehung gekoppelt, so dass bei ausgerückter Kupplungsanordnung 10 ein über den Träger 72 eingeleitetes Antriebsdrehmoment einer Elektromaschine über das Zwischenwellenelement 58 auf die Abtriebsnabe 36 und von dieser auf die Abtriebswelle 38 übertragen werden kann.

Um den Innenraum 24 des Gehäuses 12 mit Fluid zu speisen, weist die Abtriebswelle 38 einen den Fluidkanal 56 umgebenden und durch ein hülsenartiges Einsatzelement 76 nach radial innen begrenzten ringartigen Fluidkanal 78 auf. Dieser ist am Endbereich 54 der Abtriebswelle 38 über Öffnungen 80 nach radial außen offen zu einem zwischen der Gehäusenabe 18 und der Abtriebsnabe 36 liegenden Raumbereich. Dieser Raumbereich führt vorbei an einem die Gehäusenabe 36 axial an dem Nabenbereich 18 abstützenden Lager 82 weiter zum Innenraum 24, und zwar an der dem Anpresselement 40 zugewandten axialen Seite des Reibelemententrägers 34. In diesem Bereich ist an dem Nabenbereich 18 axial feststehend eine im Wesentlichen den Kupplungskolben 40 radial überdeckende, ringartig ausgebildete Stauscheibe 84 vorgesehen. Das über die Öffnungen 80 zugeführte Fluid kann einerseits in den zwischen der Stauscheibe 84 und dem Reibelemententräger 34 gebildeten Raumbereich und von dort radial außen zu den Reibflächenanordnungen 30, 32 strömen, kann andererseits jedoch über Öffnungen 86 in den zwischen dem Kupplungskolben 40 und der Stauscheibe 84 gebildeten Raumbereich strömen. Es ist somit zwischen dem Kupplungskolben 40 und der Stauscheibe 84 ein Druckausgleichsraum gebildet, welcher dafür sorgt, dass die durch Fliehkrafteinwirkung erzeugte Beeinflussung des auf den Kupplungskolben 40 wirkenden Fluiddrucks an beiden axialen Seiten näherungsweise gleich ist, so dass der auf den Kupplungskolben 40 einwirkende Fluiddruck in seiner Gesamtheit im Wesentlichen keinen Fliehkrafteinflüssen unterliegt. Insbesondere in Stillstandzeiten, in welchen der Innenraum 24 des Gehäuses 12 zumindest teilweise leer läuft, wird sich bei Wiederinbetriebnahme im zweiten Raumbereich 46 einerseits und in dem zwischen dem Kupplungskolben 40 und der Stauscheibe 84 gebildeten Ausgleichsraum andererseits gleichermaßen Fluid im radial äußeren Bereich ansammeln, um somit eine ungewünschte Axialbelastung des Kupplungskolbens 40 in Richtung auf die beiden Reibflächenanordnungen 30, 32 zu verhindern. Man erkennt dabei in Fig. 1, dass die Stauscheibe 84 nicht nur in ihrem radial äußeren Bereich im Wesentlichen fluiddicht, z.B. vermittels einer anvulkanisierten Dichtung 85, gegenüber dem sich axial bewegenden Kupplungskolben 40 abgeschlossen ist, sondern auch das axiale Widerlager für die den Kupplungskolben 40 in Richtung Ausrücken belastende Feder 50 bildet.

Das dem Innenraum 24 zugeführte Fluid wird aus diesem über Öffnungen 88 in der zweiten Gehäuseschale 16, Öffnungen 90 in dem Zwischenelement 58 und einen im Wesentlichen zwischen einer Stützhohlwelle 92 und einer mit dem Zwischenwellenelement 58 durch Verzahnungsanordnungen drehgekoppelten Pumpenantriebswelle 94 gebildeten Hohlraum 96 abgeleitet. Man erkennt dabei in Fig. 1 weiter, dass die Stützhohlwelle 92 über eine auch einen im Wesentlichen dichten Abschluss bereit stellende Lagerungs/Dichtungsanordnung 98 an den Außenumfang der Abtriebswelle 38 angeschlossen ist.

In den Fig. 1 und 2 erkennt man weiter, dass die Gehäusenabe 18 in ihrem zentralen Bereich eine Aufnahmeöffnung 100 aufweist, in welche der axiale Endbereich 54 der Abtriebswelle 38 eingreift. Ein fluiddichter Anschluss der Abtriebswelle 38 wird dabei einerseits durch ein ringartiges Dichtungselement 102 erzeugt, das in einer nach radial innen offenen Aussparung 104 aufgenommen ist. Diese Aussparung 104 ist in axialer bzw. radialer Richtung begrenzt durch ein in die Aufnahmeöffnung 100 eingesetztes, ringartiges Abschlusselement 106 mit im Wesentlichen L-förmigem Querschnitt einerseits und die Gehäusenabe 18 andererseits. Weiterhin wird ein fluiddichter Abschluss der Aufnahmeöffnung 100 nach außen durch eine axial in die Aufnahmeöffnung 100 eingesetzte Abschlusskappe 108. Diese ist entlang ihres Außenumfangs an die Gehäusenabe 18 angeschweißt, so dass hier ein vollständig fluiddichter Abschluss erzeugt ist. Das über den Fluidkanal 56 zugeführte Fluid tritt am axialen Endbereich 54 der Abtriebswelle 38 in die Aufnahmeöffnung 100 aus und gelangt von dort über die Kanäle 48 nach radial außen zum zweiten Raumbereich 46, um dort den Kupplungskolben 40 zu belasten.

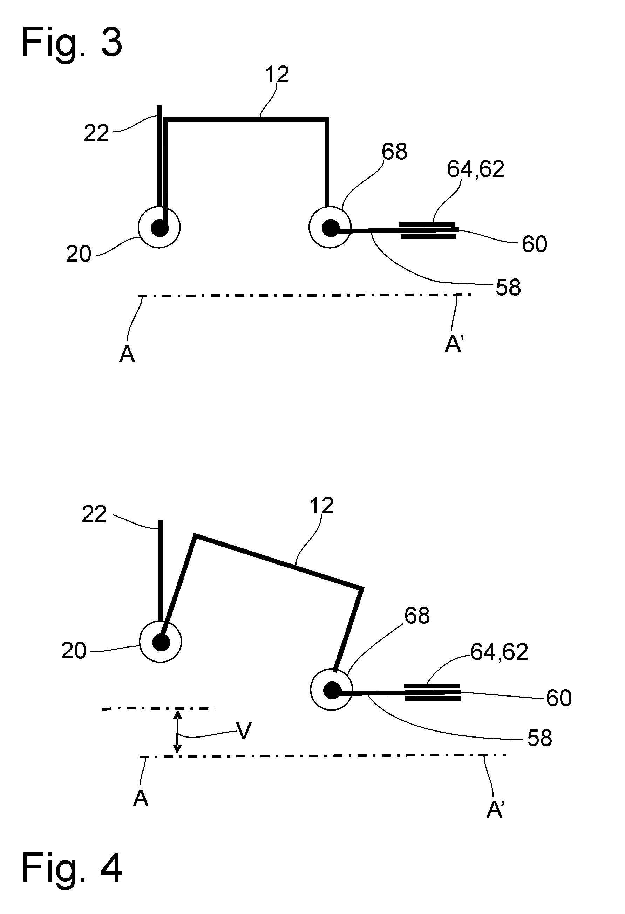

Die Fig. 1 und 2 zeigen, dass die Kupplungsanordnung 10 an ihren axialen Endbereichen, nämlich der Gehäusenabe 18 einerseits und dem Endbereich 60 des Zwischenelements 58 andererseits, über die beiden Lager 20, 62 an den feststehenden Baugruppen 22, 64 in definierter Positionierung gehalten sind. Durch diese definierte Positionierung ist weiterhin vorgegeben, um welche Drehachsen die Gehäusenabe 18 und somit das gesamte Gehäuse 12 einerseits und das Zwischenwellenelement 58 andererseits rotieren. Sofern diese Drehachsen einander entsprechen, also das Gesamtsystem um die in Fig. 1 auch erkennbare Drehachse A rotiert, grundsätzlich also der in Fig. 3 erkennbare Zustand vorliegen, in dem die beiden Drehachsen A einerseits und A' andererseits einander entsprechen, wird es keine Probleme im Rotationszustand geben. Fallen diese Drehachsen, wie dies die Fig. 4 veranschaulicht, jedoch auseinander, entsteht also ein Achsversatz V, so entstehen Zwängungen, die zu erhöhtem Verschleiß führen können. Dieser Achsversatz V kann beispielsweise dadurch entstehen, dass Fertigungs- bzw. Montagetoleranzen bei den feststehenden Baugruppen 22, 64 auftreten oder dass bei der Montage eines Antriebsaggregats mit seiner Antriebswelle einerseits und eines Getriebes mit seiner Getriebeeingangswelle andererseits ein entsprechender Versatz erzeugt wird.

Um diesem Problem entgegenzutreten, ist die erfindungsgemäße Kupplungsanordnung derart aufgebaut, dass im Bereich der beiden Lager 20, 68 ein Kippbewegungsspiel ermöglicht ist, welches über das auf Grund von Fertigungstoleranzen und auf Grund der Notwendigkeit, verschiedene Lagerkomponenten bezüglich einander drehen zu müssen, unvermeidbar ist, hinausgeht. Es kann somit also eine Kippbewegung des Gehäuses 12 mit der Gehäusenabe 18 im Bereich des Lagers 20 bezüglich der feststehenden Baugruppe 22 erfolgen. Gleichzeitig kann eine Kippbewegung des Gehäuses 12 im Bereich des Lagers 68 bezüglich des Zwischenwellenelements 58 erfolgen. Dieses wiederum ist durch das Lager 62 im Wesentlichen unverkippbar, also nur im Bereich der nicht vermeidbaren Toleranzen verkippbar, bezüglich der feststehenden Komponente 64 in an sich definierter Positionierung getragen. Es entsteht also der in Fig. 4 erkennbare Zustand, in welchem das gesamte Gehäuse 12 mit den darin angeordneten Komponenten bezüglich der beiden versetzt liegenden Drehachse A bzw. A' verkippt, also schräggestellt ist. Das Gehäuse 12 stellt hier im Wesentlichen eine Gelenkwellenverbindung bereit, die auf Grund des in den Lagern 20, 68 möglichen Kippbewegungsspiels das Auftreten von Zwängungen im Bereich dieser Lager vermeidet.

Das in den Lagern 20, 68 ermöglichte und über normale nicht vermeidbare Fertigungs- und Montagetoleranzen hinausgehende Kippbewegungsspiel kann beispielsweise derart bemessen sein, dass bei einem axialen Abstand der beiden Lager von etwa 50 mm der aufgrund des Kippbewegungsspiels ohne dem Entstehen von Zwängungen in diesen Lagern erreichbare Achsversatz V im Bereich von 0,25 mm liegt. Dies bedeutet, dass das Verhältnis des durch Kippbewegungsspiel ermöglichten Achsversatzes V zum axialen Abstand der beiden involvierten Lager 20, 68 bei etwa 0,5%, vorzugsweise also in einem Bereich von 0,1 bis 1% liegt.

Das Auftreten von Zwängungen kann gemäß einem weiteren Erfindungsaspekt weiterhin noch dadurch gemindert bzw. unterdrückt werden, dass im Bereich des bei 74 hergestellten Verzahnungseingriffs zwischen der Abtriebsnabe 36 und dem Zwischenwellenelement 58 grundsätzlich Bewegungsspiel vorhanden ist. Zu diesem Zwecke sind die Innenumfangsverzahnungen 110 am Zwischenwellenelement 58 und die Außenumfangsverzahnung 112 an der Abtriebsnabe 36 so aufeinander abgestimmt, dass ein Radialbewegungsspiel zwischen diesen beiden Komponenten oder/und ein Umfangsbewegungsspiel besteht. Dieses eine Relativbewegung, insbesondere auch Kippbewegung dieser beiden Komponenten bezüglich einander zulassende Bewegungsspiel kann beispielsweise abgestimmt sein auf das im Bereich des Lagers 68 bzw. des Lagers 20 zugelassene Kippbewegungsspiel, so dass bei Verkippung des Gehäuses 12 und dabei auch entsprechender Verkippung der Abtriebsnabe 36 bezüglich des Zwischenwellenelements 58 weder im Bereich des Lagers 68 noch im Bereich des Eingriffs der beiden Verzahnungen 110, 112 eine dem Verkippen an sich entgegenwirkende Zwängung entsteht.

Auch hier sei darauf hingewiesen, dass das zwischen dem Zwischenwellenelement 58 und der Abtriebsnabe 36 eingeführte Radial- bzw. Umfangsbewegungsspiel ein Bewegungsspiel ist, welches über das auf Grund von Fertigungstoleranzen und auf Grund der Notwendigkeit, diese beiden Bauteile zum Herstellen des Verzahnungseingriffs axial ineinander einführen zu müssen, zwangsweise vorhandene Bewegungsspiel hinausgeht.

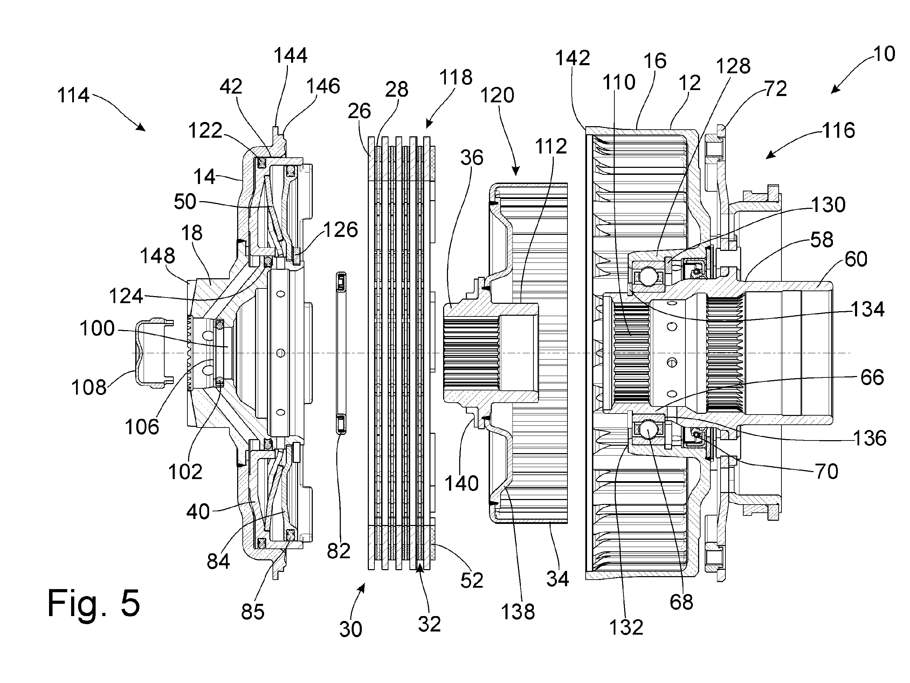

Mit Bezug auf die Fig. 5 wird nachfolgend dargelegt, wie die vorangehend hinsichtlich verschiedener Aspekte detailliert beschriebene Kupplungsanordnung 10 effizient zusammengefügt werden kann. Zu diesem Zwecke ist grundsätzlich die Kupplungsanordnung 10 in vier Vormontagebaugruppen 114, 116, 118 und 120 aufgegliedert. Die erste Vormontagebaugruppe 114 umfasst dabei im Wesentlichen die erste Gehäuseschale 14, die Gehäusenabe 18 und den Kupplungskolben 40 mit den damit zusammenwirkenden Komponenten, nämlich der Feder 50 und der Stauscheibe 84.

Die zweite Vormontagebaugruppe 116 umfasst im Wesentlichen die zweite Gehäuseschale 16, das Zwischenwellenelement 58 mit dem daran vorgesehenen Träger 72 für die Rotoranordnung einer Elektromaschine sowie die zwischen diesen beiden Bauteilen wirkenden Baugruppen, nämlich das Lager 68 und die Dichtungsanordnung 70.

Die dritte Vormontagebaugruppe 118 umfasst im Wesentlichen die beiden Reibflächenanordnungen 30, 32 mit ihren Lamellen 26, 28, und die vierte Vormontagebaugruppe 120 umfasst im Wesentlichen den Reibelemententräger 34 für die Lamellen 28 der zweiten Reibflächenanordnung 32 sowie die Abtriebsnabe 36.

Bei dem Zusammensetzen der Kupplungsanordnung 10 werden also zunächst diese vier Vormontagebaugruppen 114, 116, 118, 120 an sich zusammengefügt bzw. zusammengruppiert, bevor dann in weiteren Bearbeitungsmaßnahmen einzelne bzw. alle diese Vormontagebaugruppen zusammengesetzt werden.

Beim Aufbau der ersten Vormontagebaugruppe 114 wird dabei zunächst die erste Gehäuseschale 14 in ihrem radial inneren Bereich durch Schweißverbindung mit der Gehäusenabe 18 verbunden. Während beispielsweise die erste Gehäuseschale 14 durch Umformen eines Blechrohlings hergestellt werden kann, ist es auf Grund der vergleichsweise komplexen Formgebung vorteilhaft, die Gehäusenabe 18 beispielsweise in einem Gießvorgang mit nachfolgender Nachbearbeitung oder vollständig in Material abhebender Bearbeitung herzustellen. Die Gehäusenabe 18 wird dann in ihrem Außenumfangsbereich in eine zentrale Öffnung der ersten Gehäuseschale 14 eingesetzt und beispielsweise durch Laserschweißen mit einer ringartig vollständig umlaufenden Schweißnaht damit fest verbunden.

Durch das Zusammenfügen der ersten Gehäuseschale 14 mit der Gehäusenabe 18 entsteht auch der Aufnahmeraum 42 für den Kupplungskolben 40. Dieser wird dann in den Aufnahmeraum 42 eingefügt, unter Zwischenanordnung jeweils eines ringartigen Dichtungselements an seinem Außenumfang bzw. Innenumfang. Dabei kann das am Außenumfang vorgesehene Dichtungselement 122 beispielsweise in einer nach radial außen offenen Umfangsnut des Kupplungskolbens 40 vorgesehen sein. Das am Innenumfang vorgesehene Dichtungselement 124 kann in einer nach radial außen offenen Nut der Gehäusenabe 18 angeordnet sein. Nach dem Einfügen des Kupplungskolbens 40 kann dann die grundsätzlich ringartig ausgestaltete Feder, welche beispielsweise als Teller- bzw. Membranfeder ausgebildet ist, so eingelegt werden, dass sie mit ihrem Außenumfang an einer zugeordneten Stufe des Kupplungskolbens 40 radial zentriert ist. Darauf folgend wird die Stauscheibe 84 mit dem an ihrem Außenumfang vorgesehenen, beispielsweise durch Vulkanisieren dort festgelegten Dichtungselement 85 in den Kupplungskolben 40 eingepasst, wobei in ihrem radial inneren Bereich die Stauscheibe 84 über die Gehäusenabe 18 geschoben wird. Ein dann in einer nach radial außen offenen Umfangsnut der Gehäusenabe 18 festzulegender Sicherungsring 126 arretiert die Stauscheibe 84 in axialer Richtung derart, dass diese sich auch unter der Vorspannung der Feder 50 am Sicherungsring 126 axial abstützt. In der anderen axialen Richtung kann die Stauscheibe 84 durch eine entsprechende Radialschulter der Gehäusenabe 18 gegen Axialbewegung gehalten werden.

Vor oder nach dem Verbinden der Gehäusenabe 18 mit der ersten Gehäuseschale 14 wird das Dichtungselement 102 zusammen mit dem ringartigen Abschlusselement 106 in die Aufnahmeöffnung 100 der Gehäusenabe 18 axial eingesetzt. Auch die Abschlusskappe 118 wird in die Aufnahmeöffnung 100 eingesetzt, bis sie axial am Abschlusselement 106 anstößt. Darauf folgend wird durch Einbringen einer Schweißverbindung die Abschlusskappe 108 unter Erzeugung eines fluiddichten Abschlusses an der Gehäusenabe 18 fixiert.

Beim Zusammenfügen der zweiten Vormontagebaugruppe 116 wird das Zwischenwellenelement 58 mit dem Träger 72 und ggf. einer daran bereits getragenen Rotoranordnung (diese ist in den Figuren nicht dargestellt) durch Vernietung fest verbunden. Das Lager 68 wird an einem im radial inneren Bereich der z.B. durch Umformen eines Blechrohlings gebildeten zweiten Gehäuseschale 16 gebildeten Lagerhals 128 festgelegt, wozu einerseits ein in eine Innenumfangsnut des Lagerhalses 128 einzusetzender Sicherungsring 130 und andererseits ein am axialen Ende des Lagerhalses gebildeter Radialansatz 132 dienen. Daraufhin wird das Zwischenwellenelement 58 in die zweite Gehäuseschale 16 axial eingesetzt, wobei gleichzeitig auch die Dichtungsanordnung 70, die zuvor entweder am Außenumfang des Zwischenwellenelements 58 oder am Innenumfang des Lagerhalses 128 positioniert wird, zwischen diesen beiden Baugruppen positioniert wird. Abschließend wird dann ein weiterer Sicherungsring 134 in eine Außenumfangsnut des Zwischenwellenelements 58 eingebracht, so dass das Lager 68 auch bezüglich des Zwischenwellenelements 58 in definierter axialer Positionierung gehalten ist, somit also das Zwischenelement 58 und die zweite Gehäuseschale 16 definiert axial bezüglich einander positioniert sind. Hierzu dient auch eine am Zwischenwellenelement 58 vorgesehene Radialschulter 136, an welcher das Lager 68 axial abgestützt ist.

Die dritte Vormontagebaugruppe 118 umfasst im Wesentlichen die Lamellen 26 der ersten Reibflächenanordnung 30 und die Lamellen 28 der zweiten Reibflächenanordnung 32. Dabei tragen bei der in den Figuren dargestellten Ausgestaltungsform die Lamellen 28 der zweiten Reibflächenanordnung 32 an ihren beiden axialen Seiten Reibbeläge an einem beispielsweise als Stahlscheibe ausgebildeten Träger. Die Lamellen 26 sind als im Wesentlichen plane Metall- bzw. Stahlscheiben ausgebildet. Die in axialer Richtung vom Kupplungskolben 40 am weitesten entfernt zu positionierende und sich im Einrückzustand axial an der zweiten Gehäuseschale 16 abstützende Lamelle 26 der ersten Reibflächenanordnung trägt die daran beispielsweise festgeklebten einzelnen Abstützelemente 52. Beim Aufbau der dritten Vormontagebaugruppe 118 werden also die zuvor in der gewünschten Konfiguration bereitgestellten Lamellen 26, 28 der beiden Reibflächenanordnungen 30, 32 so angeordnet, dass immer eine Lamelle 26 und eine Lamelle 28 einander abwechseln. Diese Vormontagebaugruppe 118 kann beispielsweise zum Transport in eine andere Montagestation durch entsprechende Werkzeuge, wie z.B. Einspannwerkzeuge, zusammengehalten werden.

Die vierte Vormontagebaugruppe 120 umfasst in ihrem radial äußeren Bereich den beispielsweise durch Umformen eines Blechrohlings gebildeten Reibelemententräger, der so geformt ist, dass er an seinem Außenumfang die mit den Lamellen 28 zu deren Drehankopplung zusammenwirkende Verzahnung aufweist.

In der dargestellten Ausgestaltungsform ist der Reibelemententräger 120 mittelbar, nämlich über ein ringartiges Kopplungselement 138 mit der Abtriebsnabe 36 verbunden. Das Kopplungselement 138 ist in seinem radial äußeren Bereich durch eine beispielsweise ringartig umlaufende Schweißnaht mit dem Reibelemententräger 34 fest verbunden und ist in seinem radial inneren Bereich ebenfalls durch eine vorzugsweise ringartig umlaufende Schweißnaht mit der Abtriebsnabe 36 verbunden. Die Schweißverbindung könnte auch durch einzelne Schweißpunkte erfolgen. Insbesondere die Anbindung des Kopplungselements 138 an die Abtriebsnabe 36 könnte alternativ auch durch Einbringen von Nietelementen erfolgen, ähnlich wie auch die Verbindung zwischen dem Träger 72 und dem Zwischenwellenelement 58 realisiert ist.

Weiterhin könnte bei der vierten Vormontagebaugruppe 120 vorgesehen sein, dass der Reibelemententräger 34 mit einem das Kopplungselement 138 ersetzenden nach radial innen sich erstreckenden Abschnitt integral ausgebildet ist, so dass der Vorgang des Verbindens des Reibelemententrägers 34 mit dem Kopplungselement 138 entfallen kann und der Reibelemententräger 34 direkt an die Abtriebsnabe 36 angekoppelt ist.

Die vierte Vormontagebaugruppe 120 kann dann weiter noch ein Lagerabstützelement 140 umfassen, welches axial auf die Abtriebsnabe 36 aufgesetzt und durch diese zentriert ist und der axialen Abstützung und ggf. auch Zentrierung des Axialabstützlagers 82 dient.

Nachdem die verschiedenen Vormontagebaugruppen in der vorangehend beschriebenen Art und Weise aufgebaut worden sind, kann dann weiterhin in einer nächsten Montagestufe so vorgegangen werden, dass zunächst die dritte Vormontagebaugruppe 118 in die zweite Vormontagebaugruppe 116 axial eingesetzt wird, wobei die Lamellen 26 der ersten Reibflächenanordnung 30 in Drehkopplungseingriff mit der am Innenumfang der zweiten Gehäuseschale 16 vorgesehenen Verzahnung gebracht werden. Darauf folgend kann dann die vierte Vormontagebaugruppe 120 axial in die dritte Vormontagebaugruppe 118 eingesetzt werden und dabei die Drehkopplung zwischen dem Reibelemententräger 30 und den Lamellen 28 der zweiten Reibflächenanordnung hergestellt werden. Bei diesem Vorgang wird gleichzeitig auch die Drehkopplung zwischen dem Zwischenwellenelement 58 und der Abtriebsnabe 36 im Bereich ihrer Verzahnungen 110, 112 hergestellt.

Alternativ könnte diese Montagephase auch so durchgeführt werden, dass zunächst die dritte Vormontagebaugruppe 118 mit der vierten Vormontagebaugruppe 120 gekoppelt wird und diese beiden Vormontagebaugruppen 118, 120 dann bereits zusammengefügt in die zweite Vormontagebaugruppe 116 eingesetzt werden, wobei die Drehkopplung zwischen den Lamellen 26 und der zweiten Gehäuseschale 16 einerseits und die Drehkopplung zwischen der Abtriebsnabe 36 und dem Zwischenwellenelement 58 andererseits hergestellt werden. Bei einer weiteren alternativen Vorgehensweise könnte zunächst die zweite Vormontagebaugruppe 116 mit der vierten Vormontagebaugruppe 120 zusammengefasst werden, indem diese axial aufeinander zu bewegt werden und die Verzahnungen 110, 112 in Eingriff gebracht werden. Darauf folgend kann dann die dritte Vormontagebaugruppe 118 in den zwischen dem Reibelemententräger 34 und der zweiten Gehäuseschale 16 gebildeten ringartigen Zwischenraum eingesetzt wird und dabei die Lamellen 26 mit der zweiten Gehäuseschale 16 gekoppelt werden, während die Lamellen 28 mit dem Reibelemententräger 34 gekoppelt werden.

In dieser vorangehend in verschiedenen Variationen beschriebenen Montagestufe wird also eine die zweite Vormontagebaugruppe 116, die dritte Vormontagebaugruppe 118 und die vierte Vormontagebaugruppe 120 umfassende Einheit gebildet, die nachfolgend noch unter Zwischenlagerung des Axialabstützlagers 82 mit der ersten Vormontagebaugruppe 114 zusammengesetzt werden muss. Dabei kann das Axialabstützlager 82 in dieser dann folgenden Montagestufe als zunächst separate Baugruppe eingefügt werden. Grundsätzlich könnte das Axialabstützlager aber auch der vierten Vormontagebaugruppe 120 zugeordnet sein und bei deren Aufbau zusammen mit dem Lagerabstützelement 140 an der vierten Vormontagebaugruppe 120 angeordnet werden. Alternativ könnte das Axialabstützlager aber auch beim Aufbau der ersten Vormontagebaugruppe 114 an der Gehäusenabe 18 angeordnet werden.

In dieser Montagestufe werden also die erste Vormontagebaugruppe 114 einerseits und die zweite Vormontagebaugruppe 116 zusammen mit der dritten Vormontagebaugruppe 118 und der vierten Vormontagebaugruppe 120 andererseits aufeinander zu bewegt, bis die beiden Gehäuseschalen 14, 16 zur gegenseitigen Anlage aneinander kommen. Dabei stößt eine ringartige Stirnfläche 142 der zweiten Gehäuseschale 16 an einem nach radial außen vorspringenden Flansch 144 der ersten Gehäuseschale 14 an. Dabei wird die zweite Gehäuseschale 16 durch einen Axialansatz 146 der ersten Gehäuseschale 14 radial zentriert, so dass eine definierte axiale und radiale Positionierung dieser beiden Gehäuseschalen 14, 16 bezüglich einander vorgegeben ist. In einem dann folgenden Bearbeitungsgang werden die beiden Gehäuseschalen 14 beispielsweise von radial außen her miteinander verschweißt, wobei vorzugsweise eine ringartig umlaufende Schweißnaht gebildet wird, um auch in diesem Bereich einen vollständig dichten Abschluss des Gehäuses 12 zu erhalten.

Nach dieser Montagestufe ist die Kupplungsanordnung 10 im Wesentlichen fertiggestellt und kann in einen Antriebsstrang eingegliedert werden, beispielsweise indem eine an der Gehäusenabe 18 vorgesehene Axialverzahnung 148, beispielsweise Hirthverzahnung, in Drehkopplungseingriff gebracht wird mit einer entsprechenden Verzahnung an einem antreibenden Element, beispielsweise der Antriebswelle. Die in Fig. 1 erkennbare Abtriebswelle, also beispielsweise eine Getriebeeingangswelle, kann durch axiale Heranbewegung eines Getriebes in Drehkopplungseingriff mit der Abtriebsnabe 36 gebracht werden und dabei so weit axial bewegt werden, dass sie bis in die Aufnahmeöffnung 100 der Gehäusenabe 18 ragt.

Durch die vorangehend erläuterte Vorgehensweise beim Zusammenbau der Kupplungsanordnung 10 wird einerseits eine effiziente Durchführung der verschiedenen Montagemaßnahmen sichergestellt. Andererseits ist sichergestellt, dass insbesondere die möglicherweise zu Verunreinigungen führenden Montagevorgänge, also im Allgemeinen Schweißvorgänge, an einzelnen Vormontagebaugruppen durchgeführt werden können und dabei das Einbringen von Verunreinigungen in andere Vormontagebaugruppen vermieden wird. Die einzelnen Vormontagebaugruppen könnten nach Durchführung derartiger kritischer Bearbeitungsgänge oder grundsätzlich losgelöst von den anderen Vormontagebaugruppen Reinigungsvorgängen unterzogen werden, so dass die Gefahr des Einbringens von Verunreinigungen in die Kupplungsanordnung 10 an sich praktisch ausgeschlossen werden kann.

## Patentansprüche

1. Kupplungsanordnung, insbesondere für den Antriebsstrang eines Fahrzeugs, umfassend ein wenigstens bereichsweise mit Fluid gefülltes oder füllbares Gehäuse (12), eine mit dem Gehäuse (12) zur Drehung um eine Drehachse (A) gekoppelte erste Reibflächenanordnung (30), eine mit einem mit einer Abtriebswelle (38) zur Drehung zu koppelnden Abtriebsorgan (36) zur Drehung um eine Drehachse (A, A') gekoppelte zweite Reibflächenanordnung (32), ein mit dem Gehäuse (12) drehbares Anpresselement (40), durch welches die erste Reibflächenanordnung (30) und die zweite Reibflächenanordnung (32) in Reibeingriff pressbar sind, ein mit dem Abtriebsorgan (36) zur gemeinsamen Drehung gekoppeltes Zwischenwellenelement (58), wobei das Gehäuse (12) bezüglich einer im Wesentlichen feststehenden Baugruppe über eine erste Lageranordnung (20) drehbar zu lagern oder gelagert ist und das Zwischenwellenelement (58) bezüglich einer im Wesentlichen feststehenden Baugruppe (64) über eine zweite Lageranordnung (62) drehbar zu lagern oder gelagert ist,
**dadurch gekennzeichnet, dass** das Gehäuse (12) bezüglich des Zwischenwellenelements (58) über eine dritte Lageranordnung (68) drehbar gelagert ist und dass die erste Lageranordnung (20) ein Kippbewegungsspiel zwischen dem Gehäuse (12) und der im Wesentlichen feststehenden Baugruppe (22) zulässt und die dritte Lageranordnung (68) ein Kippbewegungsspiel zwischen dem Gehäuse (12) und dem Zwischenwellenelement (58) zulässt.

2. Kupplungsanordnung nach Anspruch 1,
**dadurch gekennzeichnet, dass** die zweite Lageranordnung (62) zwischen dem Zwischenwellenelement (58) und der im Wesentlichen feststehenden Baugruppe (64) im Wesentlichen kein Kippbewegungsspiel oder ein geringeres Kippbewegungsspiel als die erste Lageranordnung (20) und die dritte Lageranordnung (68) zulässt.

3. Kupplungsanordnung nach Anspruch 1 oder 2,
**dadurch gekennzeichnet, dass** die erste Lageranordnung (20) an einem ersten axialen Endbereich der Kupplungsanordnung (10) vorgesehen ist, die zweite Lageranordnung (62) an einem zweiten axialen Endbereich der Kupplungsanordnung (10) vorgesehen ist und die dritte Lageranordnung (68) axial zwischen der ersten Lageranordnung (20) und der zweiten Lageranordnung (62) vorgesehen ist.

4. Kupplungsanordnung nach einem der Ansprüche 1 bis 3 oder dem Oberbegriff des Anspruchs 1,
**dadurch gekennzeichnet, dass** ein Element von Abtriebsorgan (36) und Zwischenwellenelement (58) eine Außenumfangsverzahnung (112) aufweist und das andere Element von Abtriebsorgan (36) und Zwischenwellenelement (58) eine mit der Außenumfangsverzahnung (112) in Drehkopplungseingriff stehende Innenumfangsverzahnung (110) aufweist und dass die Außenumfangsverzahnung (112) und die Innenumfangsverzahnung (110) mit Umfangsbewegungsspiel oder/und Radialbewegungsspiel ineinander eingreifen.

5. Verfahren zum Zusammenbau einer Kupplungsanordnung, insbesondere nach einem der vorhergehenden Ansprüche, die Kupplungsanordnung (10) umfassend:
- ein Gehäuse (12) mit einer ersten Gehäuseschale (14) und einer zweiten Gehäuseschale (16),
- eine mit der zweiten Gehäuseschale (16) im Wesentlichen drehfest gekoppelte erste Reibflächenanordnung (30),
- eine mit einem Abtriebsorgan (36) vermittels eines Reibelemententrägers (34) im Wesentlichen drehfest gekoppelte zweite Reibflächenanordnung (32),
- ein einen Gehäuseinnenraum (24) in einen die Reibflächenanordnungen (30, 32) enthaltenden ersten Raumbereich (44) und einen mit Druckfluid zu speisenden zweiten Raumbereich (46) unterteilendes Anpresselement (40), durch welches die Reibflächenanordnungen (30, 32) in gegenseitigen Reibeingriff pressbar sind, wobei das Verfahren die Maßnahmen umfasst:
a) Bereitstellen einer ersten Vormontagebaugruppe (114), umfassend die erste Gehäuseschale (14) und das Anpresselement (40),
b) Bereitstellen einer zweiten Vormontagebaugruppe (116), umfassend die zweite Gehäuseschale (16),
c) Bereitstellen einer dritten Vormontagebaugruppe (118), umfassend die erste Reibflächenanordnung (30) und zweite Reibflächenanordnung (32),
d) Bereitstellen einer vierten Vormontagebaugruppe (120), umfassend den Reibelemententräger (34) und das Abtriebsorgan (36),
e) Verbinden der Vormontagebaugruppen (114, 116, 118, 120) miteinander und dabei Verbinden der Gehäuseschalen (14, 16) in einem Verbindungsbereich durch Schweißen.

6. Verfahren nach Anspruch 5,
**dadurch gekennzeichnet, dass** die Maßnahme e) das Einsetzen der dritten Vormontagebaugruppe (118) in die zweite Vormontagebaugruppe (116) und dabei das im Wesentlichen drehfeste Koppeln der zweiten Gehäuseschale (16) mit der ersten Reibflächenanordnung (30) umfasst und davor oder danach das Einsetzen der vierten Vormontagebaugruppe (120) in die dritte Vormontagebaugruppe (118) und dabei das im Wesentlichen drehfeste Koppeln der zweiten Reibflächenanordnung (32) mit dem Reibelemententräger (34) umfasst.

7. Verfahren nach Anspruch 5 oder 6,
**dadurch gekennzeichnet, dass** das Gehäuse (12) einen in einem radial inneren Bereich der ersten Gehäuseschale (14) vorgesehenen Nabenbereich (18) umfasst und dass die Maßnahme a) das Verbinden der ersten Gehäuseschale (14) mit dem Nabenbereich (18) sowie das Anordnen des Anpresselements (40) in einem durch die erste Gehäuseschale (14) um den Nabenbereich (18) bereitgestellten Aufnahmeraum (42) umfasst.

8. Verfahren nach Anspruch 7,
**dadurch gekennzeichnet, dass** die Kupplungsanordnung (10) eine in dem ersten Raumbereich (44) angeordnete und dem Anpresselement (40) axial gegenüberliegende Stauscheibe (84) umfasst und dass die Maßnahme a) ferner das Anbringen der Stauscheibe (84) an dem Nabenbereich (18) umfasst.

9. Verfahren nach Anspruch 8,
**dadurch gekennzeichnet, dass** die Stauscheibe (84) nach dem Anordnen des Anpresselements (40) in dem Aufnahmeraum (42) an dem Nabenbereich (18) angebracht wird.

10. Verfahren nach einem der Ansprüche 5 bis 9,
**dadurch gekennzeichnet, dass** bei Durchführung der Maßnahme e) ein Axialabstützlager (82) zwischen der ersten Vormontagebaugruppe (114) und der vierten Vormontagebaugruppe (120) angeordnet wird.

11. Verfahren nach Anspruch 7 und Anspruch 10,
**dadurch gekennzeichnet, dass** das Axialabstützlager (82) zwischen dem Nabenbereich (18) und dem Abtriebsorgan (36) angeordnet wird.

12. Verfahren nach einem der Ansprüche 5 bis 11,
**dadurch gekennzeichnet, dass** die Kupplungsanordnung (10) ein die zweite Gehäuseschale (16) über eine Lageranordnung (68) drehbar tragendes und mit dem Abtriebsorgan (36) zur gemeinsamen Drehung gekoppeltes Zwischenwellenelement (58) umfasst und dass die Maßnahme b) das Verbinden der zweiten Gehäuseschale (16) mit dem Zwischenwellenelement (58) unter Zwischenlagerung der Lageranordnung (68) und gegebenenfalls einer Dichtungsanordnung (70) umfasst.

13. Verfahren nach einem der Ansprüche 5 bis 12,
**dadurch gekennzeichnet, dass** die erste Reibflächenanordnung (30) und die zweite Reibflächenanordnung (32) eine Mehrzahl von Reibscheiben (26, 28) umfassen und dass die Maßnahme c) das alternierende Anordnen der Reibscheiben (26) der ersten Reibflächenanordnung (30) und der Reibscheiben (28) der zweiten Reibflächenanordnung (32) umfasst.

14. Verfahren nach einem der Ansprüche 5 bis 13,
**dadurch gekennzeichnet, dass** die Maßnahme d) das direkte oder mittelbare Verbinden des Reibelemententrägers (34) mit dem Abtriebsorgan (36) durch Verschweißung oder/und Vernietung umfasst.
